# FASCICULE DE BREVET EUROPEEN

(11) **EP 3 884 754 B1**
(45) Date de publication et mention de la délivrance du brevet: **02.11.2022**
(21) Numéro de dépôt: 21165183.1
(22) Date de dépôt: 26.03.2021
(51) Int. Cl.: A01C 17/00

(54) **DISPOSITIF D'ÉPANDAGE DE PARTICULES À DISQUES ROTATIFS COMPENSANT L'EFFET DOSE À FAIBLE DÉBIT**
VORRICHTUNG ZUM VERTEILEN VON PARTIKELN MIT ROTIERENDEN SCHEIBEN, DIE DEN DOSISEFFEKT BEI NIEDRIGEN DURCHFLUSSMENGEN AUSGLEICHT
DEVICE FOR SPREADING OF PARTICLES WITH ROTARY DISCS COMPENSATING THE LOW-RATE DOSE EFFECT

(30) Priorité: 26.03.2020 FR 2002956
(43) Date de publication de la demande: 29.09.2021
(73) Titulaire: Burel Production, 35220 Chateaubourg (FR)
(72) Inventeur: ARRIBARD, Gwenvel, 35000 RENNES (FR); LEVEILLE, Lionel, 35500 VITRE (FR)
(74) Mandataire: Vidon Brevets & Stratégie

(56) Documents cités:
- EP-A1- 0 489 674
- EP-A1- 1 504 645
- EP-A1- 2 454 928
- EP-A2- 1 430 763
- US-A- 3 889 883

## Description

### Domaine technique

Le domaine de l'invention est celui de l'épandage, dans le domaine de l'agriculture, de particules ou de produits se présentant sous la forme de grains, tels que des engrais ou des semences. Plus précisément, l'invention concerne les épandeurs centrifuges qui mettent en œuvre un ou plusieurs disques mobiles en rotation.

### Art antérieur

Ces épandeurs centrifuges sont connus depuis longtemps. Ils mettent en œuvre un ou plusieurs disques rotatifs, équipés de pales. Le produit à épandre peut notamment être stocké dans une trémie, et amené ou déversé au-dessus de chaque disque par une goulotte, qui laisse tomber le flux de particules en chute libre sur le disque, de façon à ce qu'il soit projeté par l'intermédiaire des pales sur le terrain sur lequel il doit être déposé. Un exemple de cette approche est décrit dans les documents de brevet EP 0 170 605 ou EP 2 454 928, au nom du Demandeur.

Dans d'autres épandeurs existants, le produit à épandre tombe directement de la trémie sur le disque d'épandage, au travers d'un ou plusieurs orifice(s) ménagé(s) dans le fond de la trémie. Le fond de la trémie est alors rotatif, et le réglage de la largeur d'épandage s'effectue en faisant pivoter les orifices d'alimentation autour de l'axe de rotation des plateaux, ce qui modifie la position du point de dépose du produit sur le disque.

Dans les épandeurs équipés de goulottes, tels que conçus et commercialisés par le Demandeur, le réglage de la largeur d'épandage s'effectue en faisant pivoter la goulotte d'alimentation autour d'un axe déporté. Le déplacement de la goulotte entraîne un déplacement du point de chute des particules sur le disque d'épandage, et donc une modification de la zone de couverture de la nappe d'épandage et de sa position par rapport à l'épandeur. En effet, le déplacement du point de chute influe notamment sur l'angle moyen d'éjection des particules de chacun des disques d'épandage, par rapport à l'axe d'avancement de l'épandeur.

Dans les épandeurs à fonds rotatifs, tels que décrits par exemple dans les documents de brevet EP 1 707 042, EP 1 430 763 ou DE 10 2009 026344, le réglage de la largeur d'épandage s'effectue en modifiant la position du point de dépose du produit à épandre sur le disque. Pour ce faire, l'ensemble du fond tourne autour d'un axe concentrique à celui des plateaux. La géométrie de l'ouverture du doseur définit la largeur du point de dépose du produit sur le disque. Notamment, les documents de brevet EP 1 707 042 ou EP 0 183 292 décrivent un ou plusieurs orifices, ménagé(s) dans le fond de la trémie, dont le degré d'obturation peut varier d'une position fermée à une position ouverte en fonction de la position d'une trappe d'obturation mobile, ou par pivotement de ces orifices autour de l'axe de rotation des plateaux. La forme de ces orifices est telle qu'en position faiblement ouverte, donc à faible débit, le produit à épandre traverse plusieurs ouvertures équivalentes en s'écoulant de la trémie vers les disques. Ainsi, dans la solution décrite dans le document de brevet EP 1 707 042, les particules à épandre s'écoulent, à faible débit, au travers de trois ouvertures, ce qui génère trois points de dépose de produit sur le disque ; dans la solution décrite dans le document de brevet EP 0 183 292, il était même déjà envisagé, à faible débit, que les particules à épandre s'écoulent au travers de quatre ouvertures, pour générer quatre points de dépose de produit sur le disque.

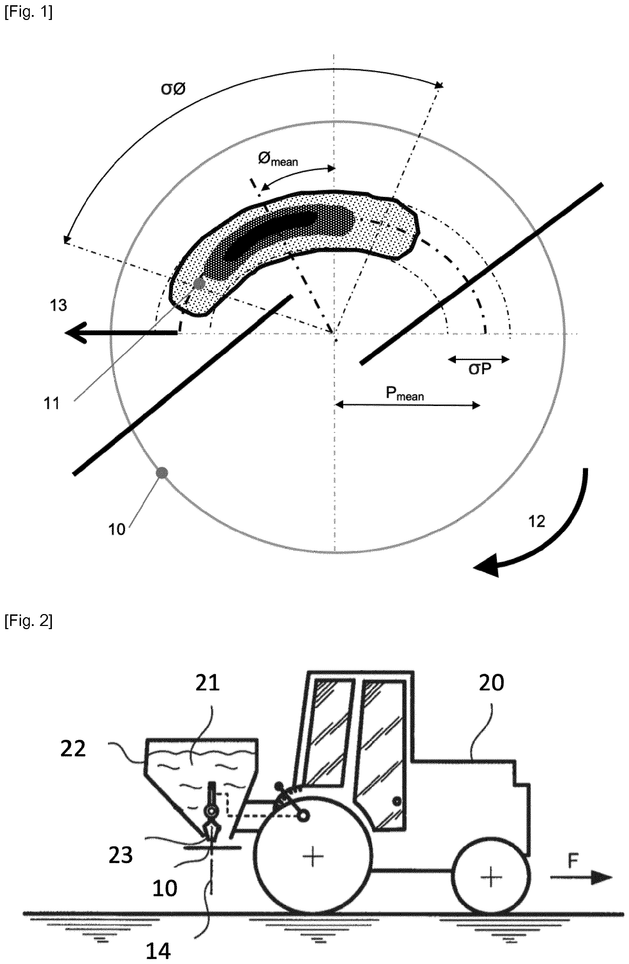

Qu'il s'agisse d'épandeurs à goulotte rotative ou d'épandeurs à fond rotatif, comme divulgué dans les documents de brevet EP 0 489 674, EP 1 504 645 et EP 2 454 928, il est commun d'observer une modification de la largeur d'épandage lorsque le débit des particules évolue. Ce phénomène, connu des constructeurs et des utilisateurs, est appelé « effet débit », ou également, par abus de langage, « effet dose ». En effet, la géométrie du point de chute, ou de dépose, du produit sur le plateau, influence directement la forme semi-circulaire, ou en croissant, de la nappe d'épandage. Pour mieux comprendre ce phénomène, la **figure 1** illustre le disque rotatif gauche 10 d'un épandeur, et la zone d'impact 11 des particules à épandre sur ce dernier, lors de leur chute ou de leur dépose depuis le doseur ; cette zone d'impact est également appelée par la suite « tache ». La flèche référencée 12 illustre le sens de rotation du disque, et la flèche référencée 13 illustre le sens d'avancement de l'épandeur.

Différents paramètres permettent de décrire la géométrie de la tache 11, que l'on exprime ci-après dans un repère polaire d'origine le centre du plateau 10 :
- Pₘₑₐₙ, le rayon moyen de dépôt de produit sur le disque ;
- σP, l'écart type sur le rayon de dépôt du produit sur le disque ;
- Ø*ₘₑₐₙ*, l'angle moyen de dépose du produit sur le disque ;
- *σ*Ø, l'écart type sur l'angle de dépose du produit sur le disque.

Ces différents paramètres sont présentés sur la **figure 1****,** pour qualifier la géométrie de la tache 11.

Une analyse fine du dépôt du produit sur le plateau d'épandage et de ses conséquences sur l'épandage a permis de mettre en évidence que cet « effet dose » est induit, d'une part, par la modification de l'écart type sur l'angle de la tache, et, d'autre part, par la modification de l'angle moyen de la tache.

Dans les systèmes actuels, qu'ils soient à base de goulottes ou de fonds rotatifs, l'écart type *σ*Ø sur l'angle de dépose du produit sur le disque est directement dépendant du débit en sortie du doseur, et cet écart type diminue à petits débits.

Ces variations de l'écart-type angulaire, induites par la modification de la géométrie du point de chute, entraînent des variations de la forme de la nappe d'épandage, et nuisent à la précision du contrôle de l'épandage.

Il existe donc un besoin d'une nouvelle technique d'épandage de particules, qui ne présente pas ces différents inconvénients de l'art antérieur.

Il existe notamment un besoin d'une telle technique, qui permette d'améliorer la précision de l'épandage et le réglage de sa largeur, en minimisant la déformation du point de chute, notamment à faibles débits. Plus précisément, il existe un besoin d'une telle technique qui permette de stabiliser l'écart type sur l'angle de dépose du produit sur le disque, quel que soit le débit d'alimentation en sortie du doseur.

Il existe également un besoin d'une telle technique, qui produise des effets intéressants à faible débit, lesquels s'estompent à des débits d'épandage plus élevés.

Il existe encore un besoin d'une telle technique qui permette de créer un écart-type important à faible débit, sans qu'il soit nécessaire de prévoir plusieurs orifices de sortie des particules de la trémie vers le disque.

Il existe enfin un besoin d'une telle technique qui permette d'optimiser conjointement le dosage des particules à épandre et leur épandage, sans que l'optimisation de l'un ne se fasse au détriment de l'autre.

Il existe également un besoin d'une telle technique qui soit mécaniquement simple, peu coûteuse.

### Exposé de l'invention

L'invention répond à ce besoin en proposant un dispositif d'épandage de particules stockées dans au moins une trémie, comprenant un doseur présentant au moins une ouverture de sortie délivrant au moins un flux des particules vers un disque d'épandage rotatif recevant et projetant les particules. Un tel dispositif d'épandage comprend également une goulotte de transport du flux de particules de la ou les ouverture(s) de sortie du doseur vers le disque d'épandage, qui présente des moyens d'éclatement et d'élargissement du ou des flux de particules disposés entre la ou les ouverture(s) de sortie du doseur et le disque d'épandage, ladite goulotte comprenant des moyens d'éclatement et d'élargissement dudit au moins un flux de particules disposés entre ladite au moins une ouverture de sortie dudit doseur et ledit disque d'épandage.

Ainsi, l'invention repose sur une approche tout à fait nouvelle et inventive des systèmes d'épandage. En effet, l'invention propose avantageusement de disposer, dans la trajectoire du flux de particules entre la sortie du doseur et son point de dépose sur le disque, des moyens d'éclatement et d'élargissement, qui permettent de compenser la diminution de l'écart-type angulaire de la zone de dépose des particules sur le disque à faible débit.

De cette façon, la modification du débit en sortie du doseur modifie la dose de particules épandues, mais induit peu de modification de la géométrie de la zone de dépose des particules sur le disque. La variation de l'angle et de l'écart-type sur l'angle d'épandage obtenu au sol est ainsi fortement réduite par rapport aux solutions de l'art antérieur, ce qui permet un meilleur contrôle de la précision d'épandage. Contrairement aux solutions de l'art antérieur des documents EP 1 707 042 ou EP 0 183 292, ce contrôle de la précision d'épandage n'est pas obtenu en prévoyant plusieurs ouvertures de passage des particules à épandre de la trémie vers le disque. Ainsi, l'épandage est optimisé, sans que cela ne se fasse au détriment de la qualité du dosage ; en d'autres termes, la fonction de dosage n'est pas impactée par la technique de l'invention, qui permet, par rapport à l'art antérieur, d'atteindre des débits d'épandage beaucoup plus faibles.

En effet, selon les lois physiques connues de l'Homme du Métier, un écoulement gravitaire ne s'établit de façon stable que lorsque le diamètre de l'ouverture est sensiblement le triple du diamètre des particules. Dans la solution du document EP 1 707 042, la précision de l'épandage est améliorée, à faible débit, en créant trois ouvertures de passage des particules à épandre du doseur vers le disque. Par rapport à cette solution antérieure, la solution de l'invention, dans laquelle les moyens d'éclatement et d'élargissement du flux sont dissociés du doseur, permet donc avantageusement d'atteindre des débits trois fois plus faibles.

Dans le cas où le doseur présente plusieurs ouvertures de sortie, qui délivrent donc plusieurs flux de particules vers le disque d'épandage, on prévoit avantageusement de disposer des moyens d'éclatement et d'élargissement sur la trajectoire de chacun des flux de particules.

Selon un aspect de l'invention, les moyens d'éclatement et d'élargissement sont disposés à l'aplomb de la ou les ouverture(s) de sortie. Ainsi, lorsque le flux de particules débouche par l'ouverture de sortie du doseur, sa trajectoire suit, par gravité, une direction perpendiculaire au plan de l'horizon, qui rencontre donc les moyens d'éclatement et d'élargissement, ces derniers étant disposés à l'aplomb de l'ouverture de sortie. De tels moyens d'éclatement et d'élargissement du flux sont de préférence centrés sur la section de sortie à petit débit de l'ouverture du doseur.

En outre, ces moyens d'éclatement et d'élargissement du flux se présentent avantageusement sous la forme d'un profil en U ou en V, disposé sur une longueur d'une paroi de fond de la goulotte de transport du flux de particules de la ou les ouverture(s) de sortie vers le disque d'épandage, un sommet du U ou du V étant disposé à l'aplomb de la ou les ouverture(s) de sortie. Plus généralement, un tel profil en U ou en V peut prendre toute forme appropriée pour provoquer un élargissement du flux de particule, et notamment une forme ovoïde, une forme de demi-sphère, etc. Il se présente par exemple sous la forme d'une nervure courant le long de la paroi de fond de la goulotte, sur la trajectoire du flux de particules. En d'autres termes, un tel profil est tel qu'il présente une base, disposée sur la paroi de fond de la goulotte, plus large que son sommet, qui forme la première zone de contact du flux de particules avec la goulotte, lors de sa sortie du doseur. L'arête de sommet de ce profil est de préférence centrée au-dessous de l'ouverture de sortie du doseur, pour remplir la fonction d'éclatement du flux de particules en deux demi-flux, et créer un écart-type angulaire *σ*Ø de la zone de contact du flux avec le disque d'épandage. Cet écart-type angulaire au niveau de la dépose, qui se traduit à faible débit par l'apparition de deux points de dépose dissociés, produit un effet surprenant et inattendu en sortie de pales, au niveau desquelles l'écart type angulaire prend la forme d'une distribution gaussienne.

Selon un autre aspect particulier de l'invention, une hauteur du profil en U ou en V est sensiblement comprise entre 0,5 cm et 4 cm. On notera que cette hauteur peut être variable, sur la longueur du profil.

Ainsi, à faible débit, les particules coulissent le long des flancs du profil en U ou en V, ce qui permet d'écarter le flux de particules, et de dissocier les points de dépose du produit sur le disque, en créant une distribution bimodale. Cependant, à gros débit, la hauteur du profil en U ou en V est telle que les moyens d'éclatement et d'élargissement du flux n'ont plus d'effet notable sur la géométrie de dépose, et la distribution est alors de type gaussienne.

Selon un mode de réalisation de l'invention, un tel profil présente une section, dans un plan sensiblement perpendiculaire à la paroi de fond, de largeur croissante en direction d'une extrémité de sortie de ladite goulotte. Ainsi, un tel profil s'élargit en direction de la sortie de la goulotte : la fonction d'élargissement du flux est ainsi accrue, jusqu'à obtenir une dissociation de flux droite et gauche de particules. Ce type de profil est particulièrement avantageux pour l'épandage de produits à très faible écart-type, tels que les produits anti-limaces par exemple.

Plus spécifiquement, un tel profil présente, dans un plan sensiblement perpendiculaire à la paroi de fond, une section triangulaire à l'aplomb de l'ouverture de sortie, et une section trapézoïdale au niveau d'une extrémité de sortie de la goulotte. Un exemple d'un tel profil est illustré sur les figures ci-après.

Selon encore un autre aspect de l'invention, un tel profil (par exemple en V) est formé par montage amovible d'un polyèdre (par exemple un prisme triangulaire) sur la paroi de fond de la goulotte. Ainsi, ces moyens d'éclatement et d'élargissement du flux de particules sont démontables et peuvent constituer un accessoire escamotable de la goulotte, qui peut être clipsé ou vissé sur la paroi de fond de cette dernière. Ceci est particulièrement avantageux lorsque l'utilisateur du dispositif d'épandage veut faire de l'épandage à très gros débit, à base de pellets par exemple. La possibilité de démonter le profil en V permet d'éviter un encrassement, et de faciliter le nettoyage de la goulotte.

Selon une caractéristique avantageuse, la paroi de fond comprend deux zones en matériau souple disposées de part et d'autre du profil (en U ou en V). Ainsi, on réalise une goulotte « bi-matériaux », composée d'une partie rigide formant le squelette de la goulotte, dont fait partie le profil (en U ou en V ou de forme plus complexe), et d'une partie souple, pour faciliter le nettoyage au champ sans démontage de la goulotte. Les deux zones en matériau souple, sont des zones de décollement de l'engrais, ou plus généralement des particules, qui peuvent se déposer en fonctionnement et provoquer un encrassement de la goulotte. En effet, les particules génèrent en déplacement un nuage de poussières qui forme *in fine* une croûte dure sur le fond de la goulotte, qu'il convient de « démouler ».

Préférentiellement, un tel matériau souple appartient au groupe comprenant :
- un matériau silicone ;
- un matériau PVC (pour « Polychlorure de vinyle) ;
- un matériau polyuréthane.

De tels matériaux souples peuvent être aisément déformés ou pressés pour démouler la croûte dure de poussières de particules, et ainsi décrotter la goulotte.

Selon encore un autre aspect, la goulotte est démontable sans outillage. Ce démontage rapide et facile de la goulotte permet de nettoyer, contrôler, ou changer la goulotte facilement. Ceci est rendu possible par l'emploi de vis de serrage ou par clipsage.

Selon un mode de réalisation particulier de l'invention, les moyens d'éclatement et d'élargissement se prolongent, en direction d'une extrémité de sortie de la goulotte, en des moyens de guidage des particules. Plus particulièrement, de tels moyens de guidage dévient le flux de particules.

Ainsi, les moyens d'éclatement et d'élargissement se prolongent, en direction du disque, par une forme déviant tout ou partie du flux de façon à décaler angulairement le barycentre de dépose des particules en petits débits. Notamment, l'extrémité avale du profil en U ou en V, à proximité de l'extrémité de sortie de la goulotte, est décalée vers l'extérieur, induisant une trajectoire non linéaire du flux de particules vers le disque d'épandage. Ceci permet avantageusement de dévier le flux à petit débit, de façon à atténuer l'effet dose, et ainsi conserver un angle moyen d'éjection constant, en sortie du disque. En effet, le déplacement du centroïde du flux de particules entraîne le déplacement du point d'alimentation moyen, qui est angulairement décalé sur le disque : à petit débit, ce point d'alimentation est retardé, par rapport au sens de rotation du disque, ce qui retarde la prise en pale d'une partie du flux.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig. 1] présente la forme et la position du point de chute des particules sur un disque d'épandage, ainsi que les paramètres géométriques permettant de caractériser la zone de dépose des particules sur le disque ;
[Fig. 2] illustre un tracteur, équipé d'un dispositif d'épandage selon un mode de réalisation de l'invention ;
[Fig. 3] présente une vue de dessus du tracteur de Fig. 2, et des nappes d'épandage obtenues au sol ;
[Fig. 4A] illustre un flux de particules dans une goulotte de distribution d'un doseur vers un disque d'épandage à faible débit ;
[Fig. 4B] illustre un flux de particules dans une goulotte de distribution d'un doseur vers un disque d'épandage à débit plus important ;
[Fig. 5A] présente une comparaison des courbes de distribution massique angulaire de la tache pour un faible débit, pour la solution de l'invention et selon l'art antérieur ;
[Fig. 5B] présente une comparaison des courbes de distribution angulaire en sortie de pale pour un faible débit, pour la solution de l'invention et selon l'art antérieur ;
[Fig. 6] présente sous forme d'histogramme une comparaison des écarts-types sur l'angle d'éjection des particules, à faible débit et à débit modéré, pour la solution de l'invention et selon l'art antérieur ;
[Fig. 7] présente une vue en perspective d'une portion d'un dispositif d'épandage selon un premier mode de réalisation de l'invention ;
[Fig. 8A] illustre une première variante de réalisation des moyens d'éclatement et d'élargissement du flux équipant la goulotte de [Fig. 7] ;
[Fig. 8B] illustre une deuxième variante de réalisation des moyens d'éclatement et d'élargissement du flux équipant la goulotte de [Fig. 7] ;
[Fig. 9] propose une vue de face d'une goulotte équipée d'un profil en V à l'aplomb de l'orifice de sortie du doseur ;
[Fig. 10] présente une vue de côté de la goulotte illustrant son démontage facile ;
[Fig. 11] illustre une goulotte bi-matière selon un mode de réalisation de l'invention ;
[Fig. 12] illustre une variante de réalisation dans laquelle le doseur présente deux ouvertures de sortie ;
[Fig. 13A] illustre une variante de réalisation dans laquelle les moyens d'éclatement et d'élargissement du flux se prolongent par des moyens de guidage ;
[Fig. 13B] illustre l'impact de cette variante sur la courbe de distribution massique angulaire en sortie de pale ;
[Fig. 14] présente une autre variante de réalisation des moyens d'éclatement et d'élargissement du flux équipant la goulotte de [Fig. 7], particulièrement adaptée à l'épandage de produits à faible écart-type, tels que l'anti-limaces ;
[Fig. 15] résume sous forme de logigramme le principe général du dispositif selon les différents modes de réalisation de l'invention.

### Description des modes de réalisation

Le principe général de l'invention repose, dans un système d'épandage, sur une solution de dépose des particules à épandre sur un plateau rotatif, qui permet de réduire l'effet dose à faibles débits. Pour ce faire, la solution introduit, dans la trajectoire du flux de particules, entre l'ouverture de sortie du doseur et le disque d'épandage, des moyens d'éclatement et d'élargissement du flux, permettant de stabiliser l'écart type angulaire associé à la zone de dépose des particules sur le disque, quel que soit le débit en sortie du doseur. Une telle solution est précise et tolérante, en ce qu'elle permet d'atténuer les erreurs de réglage de largeur de l'utilisateur. Elle est en outre indépendante du débit et de la géométrie de l'ouverture de sortie du doseur. Elle est de conception simple, car composée d'un faible nombre de pièces mécaniques. Enfin, elle est robuste, car peu sensible à l'encrassement et facile de nettoyage.

Un tel dispositif d'épandage équipe une machine permettant d'épandre de l'engrais solide ou des semis sur une parcelle cultivable, dont un exemple est illustré schématiquement sur [Fig. 2.] Elle se présente sous la forme d'un tracteur 20 équipé d'une trémie 21 contenant l'engrais ou les graines 22 à épandre.

Le fond de la trémie 21 comprend par exemple deux ouvertures, puis deux dispositifs d'alimentation réglables, puis deux dispositifs de réglage de la distribution de l'engrais se présentant par exemple sous la forme de goulottes 23 (une seule étant illustrée), laissant passer des particules 22 contenues dans la trémie 21, et placé en surplomb de deux distributeurs comprenant chacun un disque rotatif 10 portant des pales de projection.

Les disques 10 sont le plus souvent disposés dans une position sensiblement horizontale et leur rotation autour d'un axe 14 sensiblement vertical assure la projection du contenu 22 de la trémie par effet centrifuge, sous la forme d'une nappe, en forme générale de croissant, s'étendant à l'arrière de la machine d'épandage.

Les deux disques rotatifs tournent en sens inverses l'un par rapport à l'autre, ce qui permet de réaliser un épandage en engrais et/ou en semis sur une grande largeur, classiquement comprise entre 5 et 50 mètres.

De telles machines d'épandage permettent de traiter une parcelle de terrain cultivable, ou champ, le plus souvent en suivant un trajet prédéfini d'aller/retour sur celle-ci mais aussi avec des trajectoires non imposées (par exemple pour l'épandage sur prairie).

Le conducteur de la machine peut adapter certains réglages d'épandage, tels que, selon les cas, la quantité ou la dose de particules distribuées, la forme de la nappe d'épandage, et notamment sa largeur, ... Il peut par ailleurs ouvrir ou fermer sélectivement le dispositif d'alimentation de la goulotte 23, de façon à optimiser les quantités de particules épandues, notamment en fourrière, en bordure, en bout ou en pointe de champ.

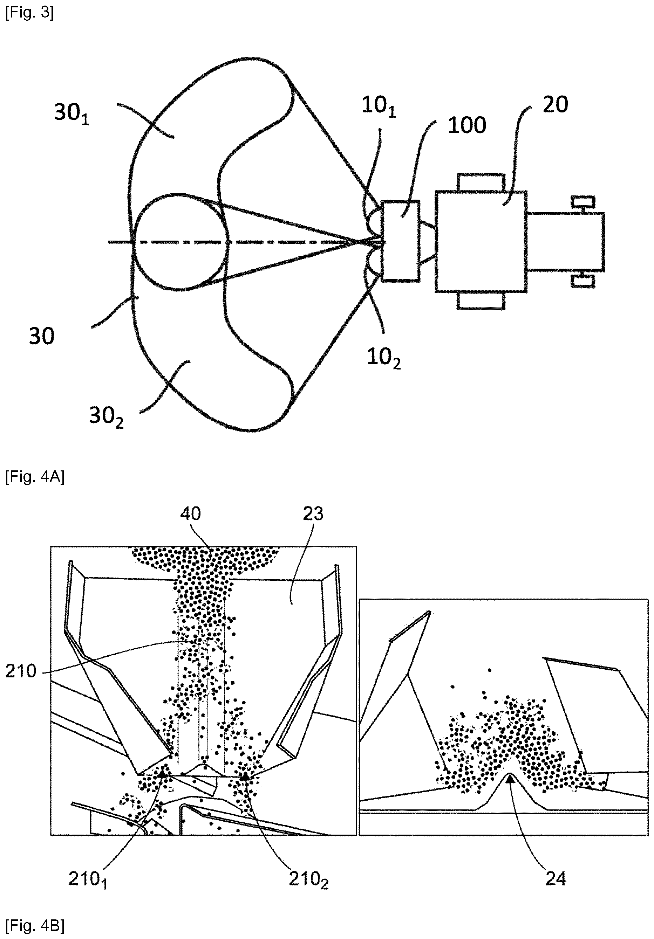

[Fig. 3] illustre une vue de dessus du tracteur de [Fig. 2]. Sur cette figure, le tracteur 20 transporte des moyens de distribution de particules 100, par exemple d'engrais granulés ou de semis. Il est équipé de deux distributeurs alimentant deux disques 10₁ et 10₂, qui assurent la projection des particules respectivement sur des surfaces 30₁ et 30₂, définissant ensemble une surface de couverture 30, éloignée de 5 à 30 m des moyens de distribution 100, et définissant une forme générale de croissant.

On présente désormais, en relation avec les figures 4A à 14, un mode de réalisation de l'invention, dans lequel le dispositif d'épandage est équipé d'une goulotte de distribution des particules à épandre, de la sortie du doseur, jusqu'au disque d'épandage.

Selon le mode de réalisation des figures 4A et 4B, une telle goulotte 23 est pourvue d'un profil en V 24, qui court sur la paroi de fond de la goulotte, selon la direction de la trajectoire du flux de particules 210, de la sortie 40 du doseur, vers l'extrémité inférieure de la goulotte.

[Fig. 4A] illustre plus particulièrement la trajectoire du flux 210 de particules le long de la goulotte, dans le cas d'un faible débit d'alimentation de Q=5kg/min en sortie du doseur. Comme on peut l'observer, le profil en V 24 remplit une fonction d'éclatement et d'élargissement du flux 210 en sortie du doseur : le flux de particules est scindé en deux flux 210₁ et 210₂, de part et d'autre du profil en V 24. Il en résulte que deux points de chute apparaissent sur le disque d'épandage 10, de part et d'autre de la ligne médiane de la goulotte 23 : on obtient donc une distribution bimodale des particules à la dépose sur le disque.

[Fig. 4B] illustre la trajectoire du flux 210 de particules pour un débit modéré de Q=57kg/min. Le flux 210 recouvre alors le profil en V 23, de sorte que l'impact de sa présence sur la tache obtenue sur le disque est moindre que dans le cas d'un faible débit. Ainsi, en gros débit, le produit à épandre passe au-dessus du profil en V 23 pour ne fournir qu'un seul point de chute sur le disque : l'effet des moyens d'éclatement et d'élargissement du flux s'estompe ainsi à plus gros débit, et a peu d'impact sur la géométrie de dépose du produit sur le disque.

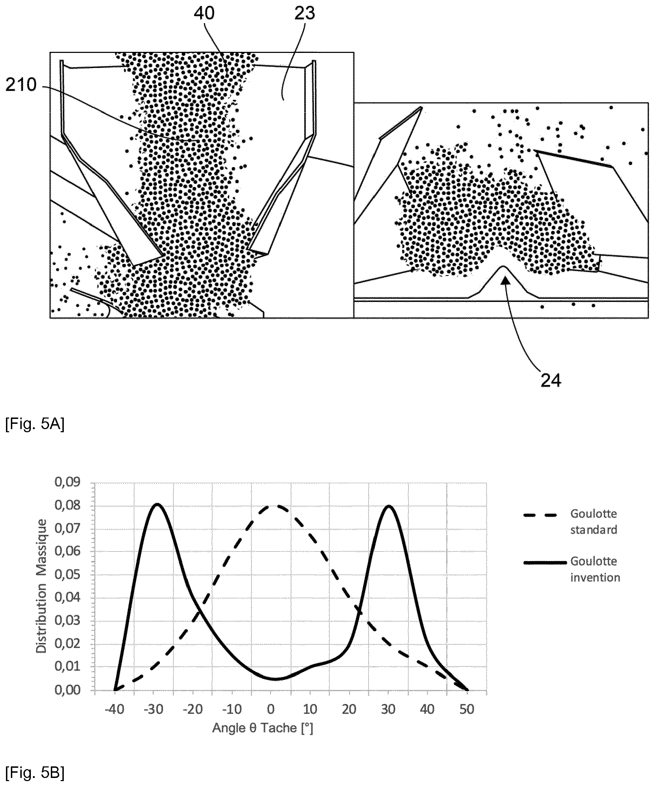

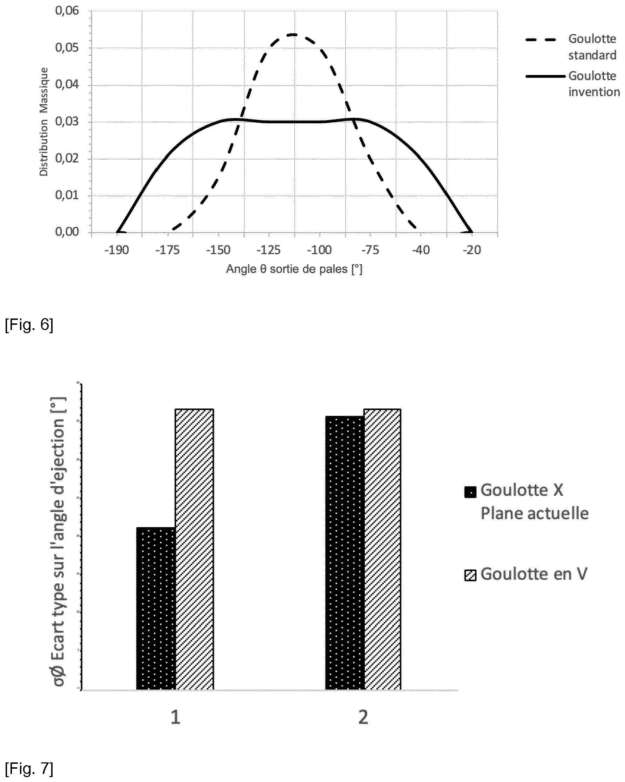

La fig. 5A présente, en traits pleins, la courbe de distribution massique angulaire de la tache obtenue sur le disque d'épandage 10, dans le cas d'un faible débit de Q=5kg/min de la figure 4A. A titre de comparaison, la courbe en traits pointillés de la Fig. 5A correspond à la même courbe de distribution massique angulaire de la tache obtenue avec une goulotte selon l'art antérieur, dépourvue de moyens d'éclatement et d'élargissement du flux 210 de particules. Comme on peut l'observer sur la figure 5A, la présence de moyens d'éclatement et d'élargissement du flux 210 de particules permet d'obtenir une distribution bimodale de particules sur le disque 10, avec deux zones de concentration en particules autour de Ø = 30° et Ø = -30°. Comme illustré par la Fig. 5B, le système d'épandage permet ensuite de lisser cette distribution, en la faisant tendre vers un profil uniforme (présence d'un plateau central). Sur la Fig. 5B, la courbe en traits pleins illustre la distribution angulaire en sortie de pale pour un faible débit Q=5kg/min, avec une goulotte 23 équipée d'un profil en V 24, et la courbe en traits pointillés illustre la même distribution angulaire, obtenue avec une goulotte de l'art antérieur. Cette courbe en traits pointillés présente un pic plus marqué centré vers -110°, alors que la courbe en traits pleins, selon un mode de réalisation de l'invention, présente un large plateau central sensiblement compris entre -150° et -75°. Ainsi, de façon surprenante, en agissant sur l'écart type angulaire au niveau de la dépose par génération de deux points de chute dissociés à faible débit (illustrés par les deux pics en traits pleins sur la Fig. 5A), on obtient un lissage de l'écart type angulaire au niveau de la sortie des pales, qui se traduit par la gaussienne aplatie en traits pleins de la Fig. 5B. Alors que l'Homme du Métier aurait naturellement pensé à uniformiser l'écart-type angulaire à la dépose (Fig. 5A) pour parvenir à uniformiser l'écart-type angulaire en sortie de pale (Fig. 5B), les inventeurs vont à l'encontre de ces *a priori* en éclatant au contraire le flux pour générer deux points de dépose dissociés, afin de produire cet effet surprenant d'uniformisation de la gaussienne de distribution en sortie de pales. En observant Fig. 6, si l'on compare les distributions angulaires en sortie de pale, entre la goulotte de l'art antérieur (motifs de hachures), et la goulotte selon un mode de réalisation de l'invention (motifs à pois), on remarque, pour tous débits en sortie du doseur (histogrammes 1, à gauche, correspondant à un débit faible et histogrammes 2, à droite, correspondant à un débit plus élevé), une augmentation et une stabilisation de l'écart type *σ*Ø de l'angle d'éjection des particules, en sortie de pale.

Ainsi, en éclatant le flux 210 de particules, il est possible de stabiliser l'écart type sur l'angle d'éjection, quel que soit le débit d'alimentation de la goulotte 23.

[Fig. 7] présente une vue en perspective d'une portion du dispositif d'épandage selon ce premier mode de réalisation de l'invention. Le doseur 42 présente une ouverture de sortie 40, qui peut être obturée par un boisseau rotatif 41. Les particules 21 stockées dans la trémie 22 s'écoulent du doseur, au travers de l'ouverture de sortie 40, et tombent sur la goulotte 23. La paroi de fond de la goulotte 23 est équipée d'un profil en V 24, qui court le long de la goulotte, dans la direction d'écoulement du flux de particules vers le disque 10. Le profil en V 24 est disposé à l'aplomb de l'ouverture de sortie 40, de sorte que l'arête supérieure du V est sensiblement centrée par rapport à l'ouverture de sortie 40. Ainsi, lorsque le flux de particules tombe, sensiblement perpendiculairement à la ligne d'horizon, depuis le doseur, il rencontre l'arête supérieure du profil en V 24, qui éclate et élargit le flux de part et d'autre du profil 24. Comme vu ci-avant, la tache de dépose des particules sur le disque 10 est alors élargie, et peut présenter, à faible débit, une distribution bimodale. Les particules sont ensuite éjectées du disque 10 par les pales 70.

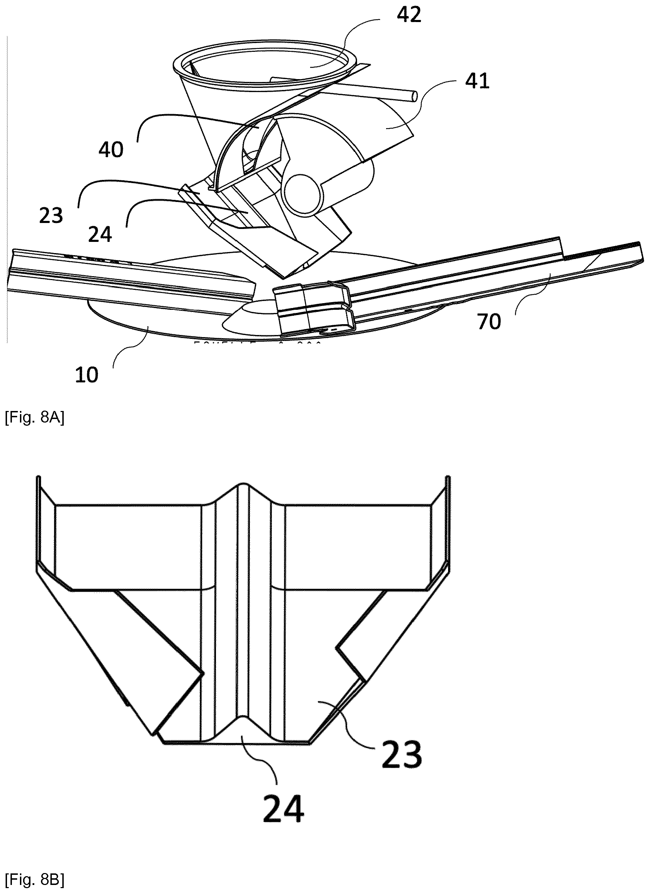

[Fig. 8A] présente un exemple de réalisation de la goulotte 23, dans laquelle les moyens d'éclatement et d'élargissement du flux comprennent une nervure centrale, sous forme de profil en V 24. [Fig. 8B] présente un autre exemple de réalisation de la goulotte 23, dans laquelle les moyens d'éclatement et d'élargissement du flux comprennent un profil en U 25.

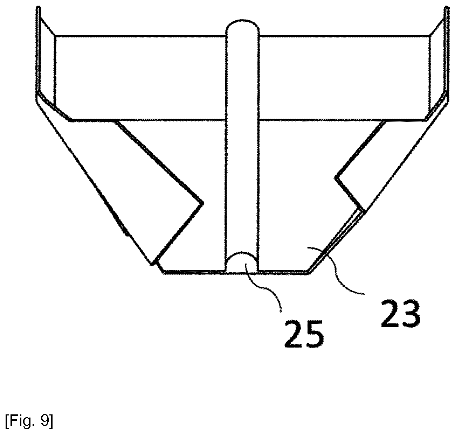

[Fig. 9] propose une vue de face d'une goulotte 23 équipée d'un profil en V 24 à l'aplomb de l'orifice 40 de sortie du doseur. Comme on le notera, l'arête supérieure 241 du profil en V 24 est de préférence centrée par rapport à l'ouverture de sortie 40.

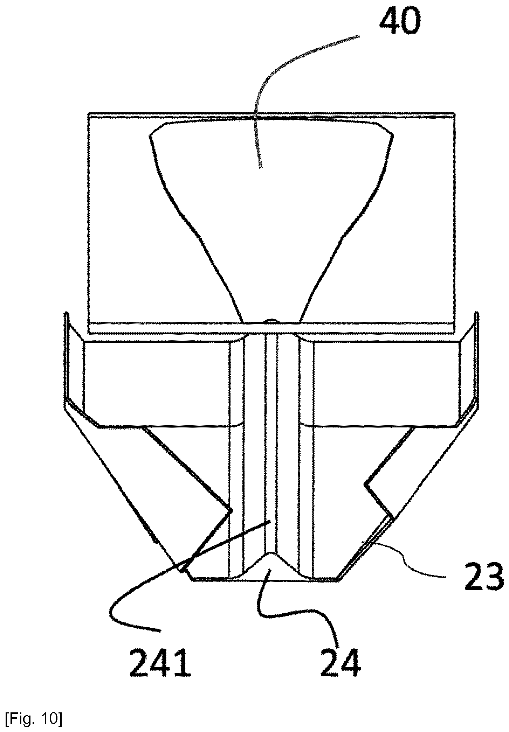

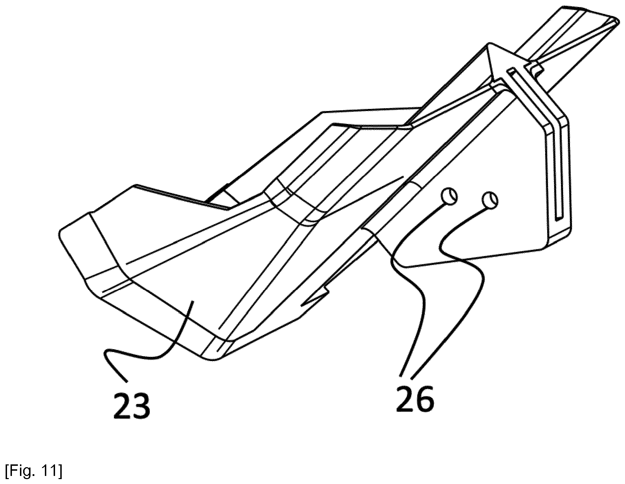

Pour garantir les performances du système dans le temps, on envisage, dans un mode de réalisation particulier, de faciliter le nettoyage de la goulotte 23. Pour ce faire, comme illustré par [Fig. 10], la goulotte 23 peut être démontée sans outillage, grâce à l'utilisation de vis de serrage, au travers des orifices 26. En variante, la goulotte 23 peut être montée par clipsage. Ainsi, il est facile de nettoyer, contrôler ou changer la goulotte 23. De plus, dans un mode de réalisation particulier illustré par [Fig. 11], la goulotte 23 est composée d'une partie rigide formant squelette et permettant de tenir les cotes fonctionnelles. Notamment, le profil en V 24 offre un raidisseur à la goulotte autorisant des procédés de plasturgie sans impacter le maintien des cotes fonctionnelles dans le temps. De part et d'autre du profil en V 24, on ajoute dans le fond du squelette de la goulotte un matériau souple, par exemple en silicone ou PVC, pour faciliter le nettoyage au champ sans démontage. Ainsi, les deux zones 271 et 272 de part et d'autre des moyens d'éclatement et d'élargissement du flux sont par exemple recouvertes de silicone souple permettant un démoulage manuel de la croûte de poussière qui se forme à l'usage. En complément, on peut aussi envisager que le profil en V 24 soit lui-même démontable, pour faciliter encore le nettoyage en cas d'encrassement.

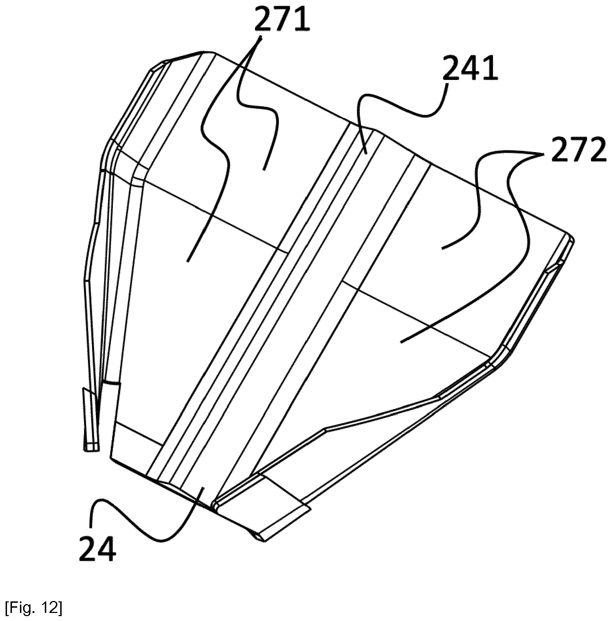

[Fig. 12] présente une variante de réalisation dans laquelle le doseur présente deux ouvertures de sortie 40₁ et 40₂. Dans ce cas, on dispose dans le fond de la goulotte 23 deux profils en V 24₁ et 24₂, qui sont chacun situés à l'aplomb de l'une des ouvertures de sortie 40₁ et 40₂ du doseur. Ces deux profils en V (ou en U) s'étendent sur la paroi de fond de la goulotte 23 le long de la direction de déplacement du flux de particules, de l'ouverture de sortie 40₁, 40₂, vers l'extrémité inférieure de la goulotte 23, où ce flux tombe sur le disque d'épandage 10.

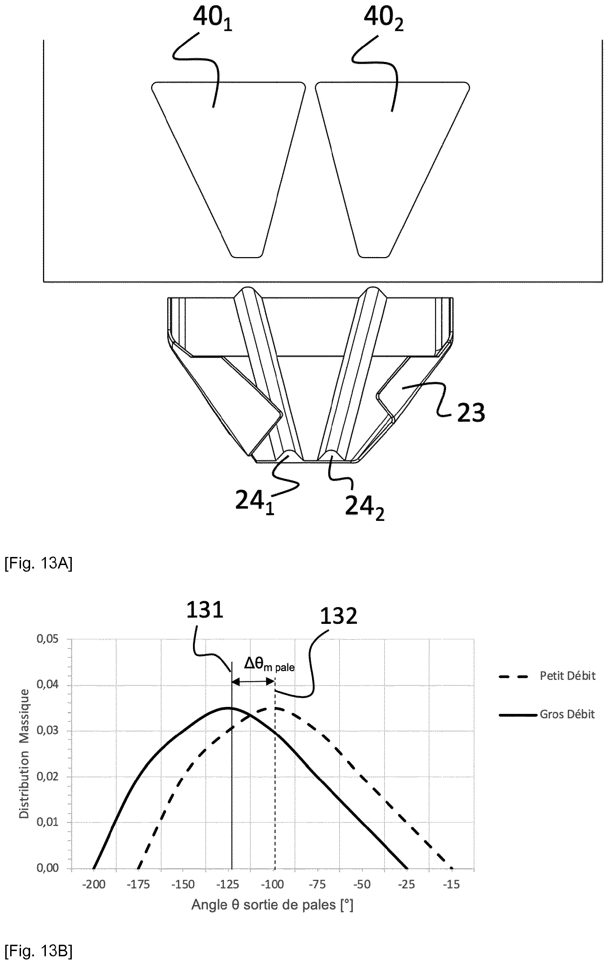

Dans une variante de réalisation, illustrée par [Fig. 13A] et [Fig. 13B], les moyens d'éclatement et d'élargissement du flux se prolongent en moyens de guidage du flux de particules. Ces moyens de guidage permettent avantageusement d'orienter le produit à épandre à faible débit, et atténuer encore davantage l'effet dose. Notamment, ils permettent de conserver un angle moyen d'éjection constant en sortie de pale, quel que soit le débit d'alimentation de la goulotte 23.

Comme illustré par [Fig. 13B], le profil en V 24 n'est pas rectiligne, mais suit une trajectoire courbe au niveau de l'extrémité inférieure de la goulotte 23, afin de déplacer le barycentre de la section du flux 210 d'écoulement de particules. Ainsi, l'arête centrale 241 du profil en V 24 suit une courbe, permettant de décaler la tache de dépose de produit sur le disque 10 à petit débit. Le repère 130 sur la [Fig. 13B] illustre cette déviation du flux à petit débit. Le déplacement du centroïde de la section du flux de produit entraîne le déplacement du point d'alimentation moyen, qui est angulairement décalé sur le disque, de façon à retarder sa prise en pale.

[Fig. 13A] illustre, en superposition, les courbes, obtenues pour différents débits massiques en sortie de doseur, des distributions massiques angulaires en sortie de pale. La courbe en traits pointillés représente l'évolution de la distribution massique en fonction de l'angle de sortie des pales pour un gros débit ; la courbe en traits pleins représente l'évolution de la distribution massique en fonction de l'angle de sortie des pales pour un petit débit.

Comme illustré par les deux lignes référencées 131 et 132, il existe donc un décalage ΔØ*_{m pale}* de l'angle moyen d'éjection en sortie de pale, à faible débit, avec un profil en V 24 strictement rectiligne, que l'on cherche à compenser grâce à l'introduction de ces moyens de guidage.

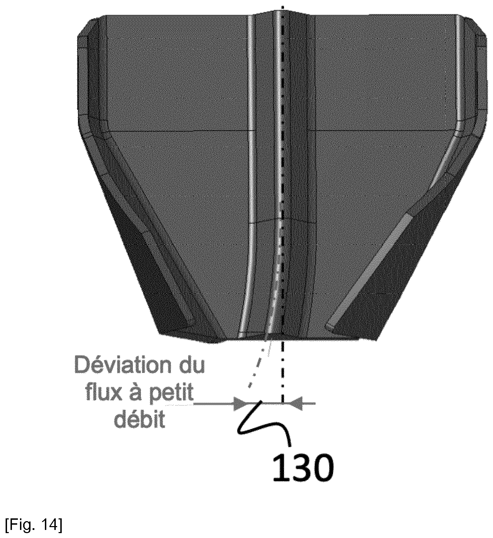

[Fig. 14] présente une autre variante de réalisation de la goulotte 23, dans laquelle le profil présente une forme plus complexe, dont la section, dans le plan perpendiculaire à la paroi de fond de la goulotte, va en s'élargissant en direction de l'extrémité de sortie de cette dernière. Une telle forme élaborée permet de dissocier les fonctions d'éclatement et d'élargissement du flux, ce qui est particulièrement avantageux pour les produits à faible écart type, tels que l'anti-limaces. Ainsi, à l'aplomb de l'ouverture de sortie du doseur (zone référencée 26), le profil présente par exemple une section triangulaire, qui permet d'éclater le flux de particules. Cette section s'élargit progressivement en direction de la sortie de la goulotte, pour prendre une forme trapézoïdale 251 au niveau de l'extrémité de sortie de la goulotte 23 (zone référencée 25) : l'élargissement du flux est ainsi accru jusqu'à atteindre une dissociation de flux de particules droite et gauche, de part et d'autre du profil. Cette variante peut être avantageusement combinée à celle de la figure [Fig. 13B], de façon à conjointement accroître l'élargissement du flux et déplacer le barycentre de la section du flux d'écoulement de particules.

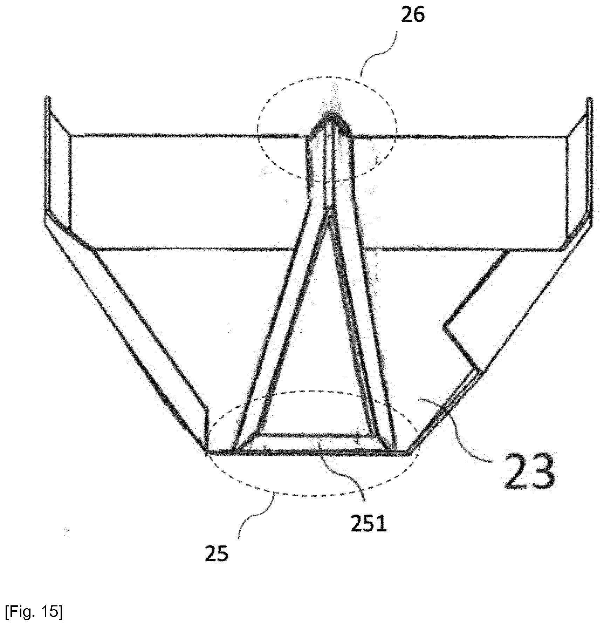

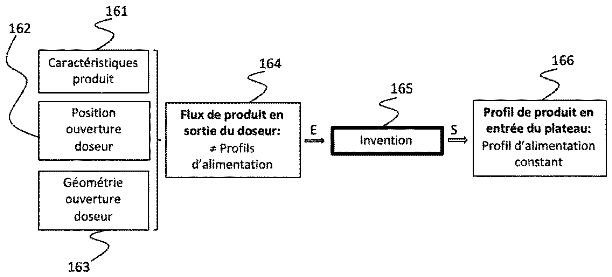

Le logigramme de la figure [Fig. 15] résume le principe général du dispositif selon les différents modes de réalisation de l'invention. Comme illustré sous forme schématique sur cette figure, il vise à obtenir un profil d'alimentation de produit en entrée du plateau 10 constant (bloc référencé 166), quel que soit le profil d'alimentation de produit en sortie du doseur (bloc référencé 164).

En effet, le flux de produit à épandre en sortie du doseur (bloc 164) dépend de multiples paramètres, tels que les caractéristiques 161 du produit à épandre (granularité, densité, etc.), la position 162 d'ouverture du doseur (i.e. position de la trappe d'obturation de cette ouverture), ou encore la géométrie 163 de cette ouverture (i.e. la forme de l'ouverture elle-même ou d'un sélecteur de débit qui peut être interfacé sur cette ouverture, pour adapter la plage de débits d'alimentation aux caractéristiques du produit à épandre). En jouant sur ces différents paramètres, il est possible d'obtenir différents profils d'alimentation du produit à épandre en sortie du doseur, afin d'optimiser la fonction de dosage de l'épandeur centrifuge.

Cependant, il est important que la fonction d'épandage soit optimale, quel que soit le profil d'alimentation en sortie du doseur.

L'optimisation de cette fonction d'épandage s'effectue, selon les différents modes de réalisation de l'invention, au moyen des moyens d'éclatement et d'élargissement du flux (bloc 165), qui ont un effet fort à faible débit, qui s'estompe à débit plus élevé, et qui permettent (bloc 166), d'obtenir un profil d'alimentation des disques d'épandage constant, quel que soit le profil d'alimentation en sortie du doseur.

Ainsi, dans ses différents modes de réalisation, l'invention permet une dissociation des fonctions de dosage et d'épandage, contrairement aux techniques de l'art antérieur.

## Revendications

1. Dispositif d'épandage de particules (21) stockées dans au moins une trémie (22 ; 100), comprenant un doseur présentant au moins une ouverture de sortie (40) délivrant au moins un flux (210) desdites particules vers un disque (10) d'épandage rotatif recevant et projetant lesdites particules, et comprenant une goulotte (23) de transport dudit flux de particules de ladite au moins une ouverture de sortie dudit doseur vers ledit disque d'épandage,
**caractérisé en ce que** ladite goulotte comprend des moyens (24 ; 25 ; 141) d'éclatement et d'élargissement dudit au moins un flux de particules disposés entre ladite au moins une ouverture de sortie dudit doseur et ledit disque d'épandage.

2. Dispositif d'épandage selon la revendication 1, **caractérisé en ce que** lesdits moyens d'éclatement et d'élargissement sont disposés à l'aplomb de ladite au moins une ouverture de sortie.

3. Dispositif d'épandage selon l'une quelconque des revendications 1 et 2, **caractérisé en ce que** ladite goulotte présente, sur une longueur d'une paroi de fond, au moins un profil en U ou en V formant moyens d'éclatement et d'élargissement dudit flux, un sommet du U ou du V étant disposé à l'aplomb de ladite au moins une ouverture de sortie.

4. Dispositif d'épandage selon la revendication 3, **caractérisé en ce qu'**une hauteur dudit profil en U ou en V est sensiblement comprise entre 0,5 cm et 4 cm.

5. Dispositif d'épandage selon l'une quelconque des revendications 3 et 4, **caractérisé en ce que** ledit profil présente une section, dans un plan sensiblement perpendiculaire à ladite paroi de fond, de largeur croissante en direction d'une extrémité de sortie de ladite goulotte.

6. Dispositif d'épandage selon la revendication 3, **caractérisé en ce que** ledit profil présente, dans un plan sensiblement perpendiculaire à ladite paroi de fond, une section triangulaire (26) à l'aplomb de ladite au moins une ouverture de sortie, et une section trapézoïdale (25) au niveau d'une extrémité de sortie de ladite goulotte.

7. Dispositif d'épandage selon l'une quelconque des revendications 3 à 6, **caractérisé en ce que** ledit profil est formé par montage amovible d'un polyèdre sur ladite paroi de fond de ladite goulotte.

8. Dispositif d'épandage selon l'une quelconque des revendications 3 à 6, **caractérisé en ce que** ladite paroi de fond comprend deux zones (271, 272) en matériau souple disposées de part et d'autre dudit profil.

9. Dispositif d'épandage selon la revendication 8, **caractérisé en ce que** ledit matériau souple appartient au groupe comprenant :
- un matériau silicone ;
- un matériau PVC (pour « Polychlorure de vinyle) ;
- un matériau polyuréthane.

10. Dispositif d'épandage selon l'une quelconque des revendications 1 à 9, **caractérisé en ce que** ladite goulotte est démontable sans outillage.

11. Dispositif d'épandage selon l'une quelconque des revendications 1 à 10, **caractérisé en ce que** lesdits moyens d'éclatement et d'élargissement se prolongent, en direction d'une extrémité de sortie de ladite goulotte, en des moyens de guidage desdites particules.

12. Dispositif d'épandage selon la revendication 11, **caractérisé en ce que** lesdits moyens de guidage dévient le flux de particules.

## Patentansprüche

1. Vorrichtung zum Verteilen von Partikeln (21), die in mindestens einem Trichter (22; 100) gelagert sind, umfassend eine Dosiereinrichtung, die mindestens eine Ausgabeöffnung (40) aufweist, die mindestens einen Strom (210) der Partikel zu einer rotierenden Verteilungsscheibe (10) liefert, die die Partikel aufnimmt und auswirft, und umfassend eine Rinne (23) zur Beförderung des Partikelstroms von der mindestens einen Ausgabeöffnung der Dosiereinrichtung zu der Verteilungsscheibe,
**dadurch gekennzeichnet, dass** die Rinne Mittel (24; 25; 141) zum Zerteilen und Ausbreiten des mindestens einen Stroms von Partikeln, die zwischen der mindestens einen Ausgabeöffnung der Dosiereinrichtung und der Verteilungsscheibe angeordnet sind, umfasst.

2. Verteilungsvorrichtung nach Anspruch 1, **dadurch gekennzeichnet, dass** die Mittel zum Zerteilen und Ausbreiten senkrecht auf die mindestens eine Ausgabeöffnung angeordnet sind.

3. Verteilungsvorrichtung nach einem der Ansprüche 1 und 2, **dadurch gekennzeichnet, dass** die Rinne auf einer Länge einer Bodenwand mindestens ein U- oder V-Profil aufweist, das die Mittel zum Zerteilen und Ausbreiten des Stroms bildet, wobei eine Spitze des U oder V senkrecht auf die mindestens eine Ausgabeöffnung angeordnet ist.

4. Verteilungsvorrichtung nach Anspruch 3, **dadurch gekennzeichnet, dass** eine Höhe des U- oder V-Profils im Wesentlichen zwischen 0,5 cm und 4 cm beträgt.

5. Verteilungsvorrichtung nach einem der Ansprüche 3 und 4, **dadurch gekennzeichnet, dass** das Profil in einer Ebene im Wesentlichen senkrecht auf die Bodenwand einen Querschnitt mit zunehmender Breite in Richtung eines Ausgabeendes der Rinne aufweist.

6. Verteilungsvorrichtung nach Anspruch 3, **dadurch gekennzeichnet, dass** das Profil in einer Ebene im Wesentlichen senkrecht auf die Bodenwand einen dreieckigen Querschnitt (26) senkrecht auf die mindestens eine Ausgabeöffnung und einen trapezförmigen Querschnitt (25) im Bereich eines Ausgabeendes der Rinne aufweist.

7. Verteilungsvorrichtung nach einem der Ansprüche 3 bis 6, **dadurch gekennzeichnet, dass** das Profil durch lösbare Montage eines Polyeders auf der Bodenwand der Rinne gebildet wird.

8. Verteilungsvorrichtung nach einem der Ansprüche 3 bis 6, **dadurch gekennzeichnet, dass** die Bodenwand zwei Zonen (271, 272) aus einem weichen Material umfasst, die beiderseits des Profils angeordnet sind.

9. Verteilungsvorrichtung nach Anspruch 8, **dadurch gekennzeichnet, dass** das weiche Material der Gruppe angehört, umfassend:
- ein Silikonmaterial,
- ein PVC-Material (für "Polyvinylchlorid");
- ein Polyurethanmaterial.

10. Verteilungsvorrichtung nach einem der Ansprüche 1 bis 9, **dadurch gekennzeichnet, dass** die Rinne ohne Werkzeug demontierbar ist.

11. Verteilungsvorrichtung nach einem der Ansprüche 1 bis 10, **dadurch gekennzeichnet, dass** sich die Mittel zum Ausbreiten und Zerteilen in Richtung eines Ausgabeendes der Rinne in Führungsmitteln für die Partikel fortsetzen.

12. Verteilungsvorrichtung nach Anspruch 11, **dadurch gekennzeichnet, dass** die Führungsmittel den Partikelstrom umlenken.

## Claims

1. Spreading device for particles (21) which are stored in at least one hopper (22; 100), comprising a metering member which has at least one outlet opening (40) which supplies at least one flow (210) of the particles towards a rotating spreading disc (10) which receives and projects the particles, and comprising a transport channel (23) for the flow of particles from the at least one outlet opening of the metering member towards the spreading disc,
**characterised in that** the channel comprises breaking up and widening means (24; 25; 141) for the at least one flow of particles which are arranged between the at least one outlet opening of the metering member and the spreading disc.

2. Spreading device according to claim 1, **characterised in that** the breaking up and widening means are arranged perpendicularly to the at least one outlet opening.

3. Spreading device according to any one of claims 1 and 2, **characterised in that** the channel has, over a length of a base wall, at least one U-shaped or V-shaped profile forming breaking up and widening means for the flow, a peak of the U or V being arranged perpendicularly to the at least one outlet opening.

4. Spreading device according to claim 3, **characterised in that** a height of the U-shaped or V-shaped profile is substantially between 0.5 cm and 4 cm.

5. Spreading device according to any one of claims 3 and 4, **characterised in that** the profile has a section, in a plane which is substantially perpendicular to the base wall, with an increasing width in the direction of an outlet end of the channel.

6. Spreading device according to claim 3, **characterised in that** the profile has, in a plane which is substantially perpendicular to the base wall, a triangular section (26) perpendicularly to the at least one outlet opening and a trapezoidal section (25) in the region of an outlet end of the channel.

7. Spreading device according to any one of claims 3 to 6, **characterised in that** the profile is formed by removably mounting a polyhedron on the base wall of the channel.

8. Spreading device according to any one of claims 3 to 6, **characterised in that** the base wall comprises two zones (271, 272) which are made of a flexible material and which are arranged at one side and the other of the profile.

9. Spreading device according to claim 8, **characterised in that** the flexible material belongs to the group comprising:
- a silicone material;
- a PVC material (for "polyvinyl chloride");
- a polyurethane material.

10. Spreading device according to any one of claims 1 to 9, **characterised in that** the channel can be disassembled without tools.

11. Spreading device according to any one of claims 1 to 10, **characterised in that** the breaking up and widening means extend, in the direction of an outlet end of the channel, in the form of guiding means for the particles.

12. Spreading device according to claim 11, **characterised in that** the guiding means redirect the flow of particles.
